# EUROPÄISCHE PATENTSCHRIFT

(11) **EP 2 957 682 B1**
(45) Veröffentlichungstag und Bekanntmachung des Hinweises auf die Patenterteilung: **28.12.2016**
(21) Anmeldenummer: 15171822.8
(22) Anmeldetag: 12.06.2015
(51) Int. Cl.: E03C 1/04, F16K 31/60, F16K 11/078

(54) **SANITÄRARMATUR MIT EINEM ZUG-DREH-MECHANISMUS ZU IHRER BEDIENUNG**
SANITARY FITTING WITH A TRAIN ROTATION MECHANISM FOR OPERATING THEM
ROBINETTERIE DOTÉE D'UN MÉCANISME DE ROTATION ET DE TIRAGE POUR SON UTILISATION

(30) Priorität: 16.06.2014 DE 102014108427
(43) Veröffentlichungstag der Anmeldung: 23.12.2015
(73) Patentinhaber: Ideal Standard International NV, 1935 Zaventem (BE)
(72) Erfinder: Müller, Alexander, 54518 Hupperath (DE)
(74) Vertreter: Müller, Karl-Ernst

(56) Entgegenhaltungen:
- WO-A1-01/29458
- WO-A1-2005/085691
- DE-T2- 60 200 398
- DE-U1- 20 300 761
- DE-U1- 20 315 687
- DE-U1-202014 001 231
- US-A- 4 478 249

## Beschreibung

Die Erfindung betrifft eine Sanitärarmatur mit einem Armaturenkörper und mit einer in dem Armaturenkörper angeordneten und bodenseitig an eine Kaltwasserzuleitung und eine Warmwasserzuleitung angeschlossenen sowie einen mit einem Armaturenauslauf verbundenen Mischwasserausgang aufweisenden Mischkartusche, wobei an dem Armaturenkörper ein Bedienungselement zur Einstellung von Menge und Temperatur des in der Mischkartusche zu erzeugenden Mischwassers angeordnet ist, welches an einen an der Mischkartusche angeordneten Stellhebel gekoppelt ist, mit dem durch Verschwenken um eine horizontal angeordnete Schwenkachse die Durchflussmenge einstellbar und durch Verdrehen um eine Mittelachse das Mischungsverhältnis des zufließenden Kalt- und Warmwassers einstellbar ist, wobei eine lineare Verschiebung des Bedienungselements in die Verschwenkung des Stellhebels und eine Drehbewegung des Bedienungselements in die Verdrehung des Stellhebels umsetzbar ist.

Eine Sanitärarmatur mit den vorgenannten Merkmalen ist aus der DE 60 200 398 T2 bekannt. Soweit beim Gebrauch der Sanitärarmatur mittels des an der Mischkartusche angebrachten Stellhebels eine Einstellung von Menge und Temperatur des jeweils zu erzeugenden Mischwassers vorgenommen wird, führt eine Verschwenkung des Stellhebels zu einer Mengenregulierung, während eine Verdrehung des Stellhebels der Einstellung der Mischwassertemperatur dient. Bei der bekannten Sanitärarmatur ist hierzu auf dem Armaturenkörper unterhalb des Armaturenauslaufes ein auf dem Armaturenkörper gleitend angeordnetes, hülsenförmiges Bedienungselement angeordnet, welches über eine entsprechende Verbindungsmimik mit dem Stellhebel der Mischkartusche verbunden ist. Demnach wird eine Drehung des hülsenförmigen Bedienungselements in eine Verdrehung des Stellhebels umgesetzt und hierdurch das Mischungsverhältnis des zufließenden kalten und warmen Wassers eingestellt. Eine lineare Verschiebung des hülsenförmigen Bedienungselements wird in eine Verschwenkung des Stellhebels mit einer dadurch bewirkten Einstellung der abgegebenen Wassermenge umgesetzt.

Mit einer derartigen Sanitärarmatur ist der Nachteil verbunden, dass die Anordnung der Bedienungshülse unterhalb des Armaturenauslaufes nicht der Gewöhnung der Benutzer an ein üblicherweise am oberen Ende des Armaturenkörpers angeordnetes Bedienungselement in Form eines Bedienhebels bei einem sogenannten Einhebelmischer entspricht, und dass die Verbindung zwischen der außen auf dem Armaturenkörper angeordneten Bedienungshülse und dem im Inneren des Armaturenkörpers angeordneten Stellhebel der Mischkartusche nur umständlich zu realisieren und auch mit der Gefahr von Undichtigkeit behaftet ist, weil die Bedienungshülse seitlich zu dem von der Mischkartusche zum Armaturenauslauf verlaufenden Mischwasserweg angeordnet ist.

Ein angesprochener, sogenannter Einhebelmischer ist beispielsweise aus der DE 10 2006 006 774 A1 bekannt. Hierbei ist auf den mit seinem oberen Ende über den die Funktionsteile der Sanitärarmatur aufnehmenden Armaturenkörper überstehenden Stellhebel ein Bedienhebel aufgesetzt und mit dem Stellhebel fest verbunden, der an dem Armaturenkörper sowohl schwenkbar als auch verdrehbar geführt ist. Bei derartigen Einhebelmischern sind beispielsweise Kollisionen von zueinander beweglichen Bauteilen in allen Stellungen des Stellhebels zu vermeiden, was entsprechende Freiräume zwischen den beteiligten Bauteilen und die Ausbildung von Freilegungen, Anschrägungen und/oder Aussparungen bedingt. Somit entstehen Nachteile hinsichtlich der Dichtheit und der mechanischen Belastbarkeit der Sanitärarmatur.

Bei der in der DE 203 19 106 U1 beschriebenen Sanitärarmatur ist das Bedienungselement in Form eines Hebels ebenfalls unterhalb des Armaturenauslaufes angeordnet, wobei der an dem Stellhebel der Mischkartusche angeschlossene Bedienhebel durch eine als Manschette wirkende, an dem Armaturenkörper verschieblich und drehbar geführte Hülse hindurchgeführt ist.

Die US 4,478,249 A zeigt weiterhin schon ein Bedienungselement in Form eines am oberen Ende eines Armaturenkörpers drehbar und linear verschiebbar angeordneten Betätigungsknaufes, welcher allerdings über eine komplizierte Mimik an die Mischkartusche angeschlossen ist.

Der Erfindung liegt daher die Aufgabe zugrunde, eine Sanitärarmatur mit den eingangs genannten, gattungsgemäßen Merkmalen derart zu verbessern, dass das Bedienungselement entsprechend einem geläufigen Einhebelmischer am oberen Ende des Armaturenkörpers angeordnet und dabei gleichzeitig eine kompakte Bauweise der Sanitärarmatur ermöglicht ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht im Einzelnen vor, dass das Bedienungselement als Zug-Dreh-Mechanismus mit einem auf dem oberen Ende des Armaturenkörpers angeordneten und am Armaturenkörper linear verschieblich geführten und um seine Mittelachse drehbaren Betätigungsknauf ausgebildet ist, wobei zur Umsetzung der Bewegungen des Betätigungsknaufes zwischen Stellhebel der Mischkartusche und Betätigungsknauf eine mit dem Betätigungsknauf fest verbundene Kulissenhülse angeordnet ist, mittels der die lineare Verschiebung der Kulissenhülse in die Verschwenkung des Stellhebels und die Drehbewegung der Kulissenhülse in die Verdrehung des Stellhebels umsetzbar ist.

Das erfindungsgemäße Prinzip beruht somit darauf, dass über die zwischen dem in an sich bekannter Weise am oberen Ende des Armaturenkörpers angeordneten Betätigungsknauf und dem Stellhebel der Mischkartusche angeordnete Kulissenhülse eine unmittelbare Umsetzung der Bewegungen des Betätigungsknaufes in die erforderlichen Stellbewegungen des Stellhebels der Mischkartusche gegeben ist. Insoweit entfallen im Vergleich mit einem üblichen Einhebelmischer störende Abstände, Freilegungen, Anschrägungen oder auch Aussparungen am Äußeren der Sanitärarmatur. Weiterhin ist das Innenleben der Sanitärarmatur durch die vorgesehene Kulissenhülse vollständig abgedeckt und somit gegen das Eindringen von Verunreinigungen und/oder Wasser geschützt.

Nach einem Ausführungsbeispiel der Erfindung kann vorgesehen sein, dass die Kulissenhülse wenigstens ein in ihrer Wandung ausgebildetes Langloch zur Aufnahme und Führung eines an dem oberen Ende des Stellhebels der Mischkartusche angebrachten Bolzens aufweist, wobei die Längsachse des Langloches im Winkel zur Mittelachse des Stellhebels ausgerichtet ist derart, dass der Stellhebel bei der Längsverschiebung der Kulissenhülse gegenüber dem ortsfesten Stellhebel durch die Bewegung des Bolzens entlang des Langloches verschwenkt wird.

Insbesondere zur Verbesserung der Montage der Sanitärarmatur kann vorgesehen sein, dass auf den an der Mischkartusche befindlichen Stellhebel ein Adapter als Träger des den Adapter quer durchsetzenden Bolzens aufgesetzt und fest mit dem Stellhebel verbunden ist, wobei die den Stellhebel einschließlich Adapter außen übergreifende Kulissenhülse zwei einander gegenüberliegende und die beiden überstehenden Enden des Bolzens aufnehmende Langlöcher aufweist. Hiermit ist es möglich, Adapter, Kulissenhülse und Bolzen vorzumontieren und den Adapter anschließend auf den Stellhebel aufzusetzen.

Zur Verbesserung der Gleitbewegung der Kulissenhülse im Armaturenkörper kann vorgesehen sein, dass die Kulissenhülse mittels eines auf ihrem äußeren Umfang festgelegten und zwischen Kulissenhülse und Armaturenkörper angeordneten Gleitringes in dem Armaturenkörper leicht verschiebbar und drehbar ist. Soweit die Kulissenhülse insbesondere in der maximalen Öffnungsstellung die Abdeckung des Innenlebens der Sanitärarmatur nach außen besorgt, ist vorgesehen, dass der Gleitring in dem der Mischkartusche zugewandten Endbereich der Kulissenhülse derart angeordnet ist, dass bei in die maximale Öffnungsstellung des Stellhebels verschobener Kulissenhülse der Gleitring im Inneren des Armaturenkörpers verbleibt.

Im Hinblick auf eine Verbesserung der Abdeckung des Innenlebens der Armatur kann nach einem Ausführungsbeispiel der Erfindung zusätzlich vorgesehen sein, dass der Betätigungsknauf mit einer in Längsrichtung des Armaturenkörpers ausgerichteten umlaufenden Schürze in seiner Schließstellung den Armaturenkörper außen übergreift, wobei die Längsrichtung der an den Betätigungsknauf angesetzten Schürze derart bemessen ist, dass in der maximalen Öffnungsstellung des Stellhebels die Schürze den Abstand zwischen dem Betätigungsknauf und dem Armaturenkörper überdeckt.

In der Zeichnung ist ein Ausführungsbeispiel der Erfindung wiedergegeben, welches nachstehend beschrieben ist. Es zeigen:

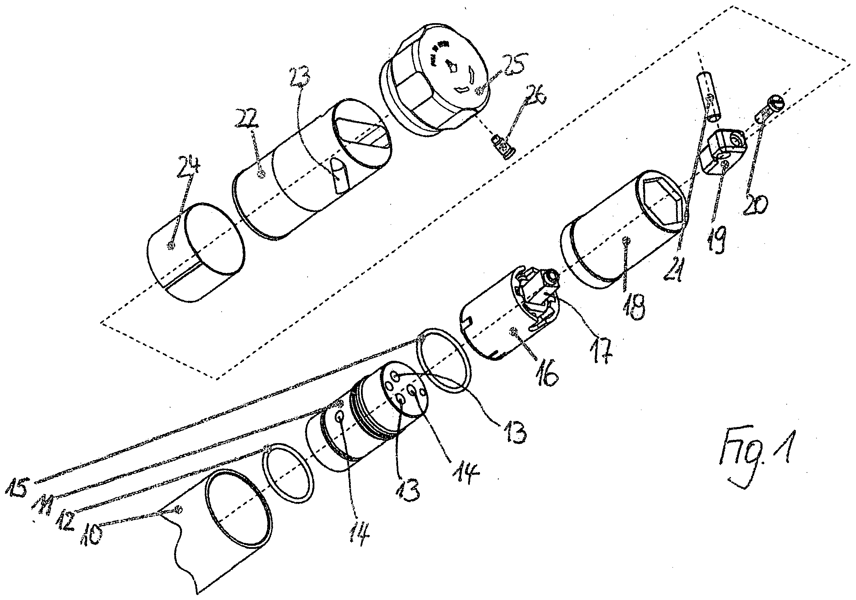

- Fig. 1:: den Aufbau einer Sanitärarmatur in einer auseinandergezogenen Perspektivdarstellung ihrer Einzelteile,
- Fig. 2:: den Bedienbereich der Sanitärarmatur in einer Schnittdarstellung bei vollständig geöffneter Sanitärarmatur,
- Fig. 3:: den Gegenstand der Fig. 2 in der Schließstellung der Sanitärarmatur.

Eine gemäß dem gattungsbildenden Stand der Technik nach der DE 10 2006 006 774 A1 als auf einem Waschtisch oder dergleichen aufgesetzte Standarmatur ausgebildete Sanitärarmatur weist einen Armaturenkörper 10 auf, in den zuunterst ein Einsatzstück 11 eingeschoben ist. In dem Einsatzstück 11 sind in an sich bekannter Weise zwei Kanäle 13 für die Kaltwasser- und Warmwasserzuleitung ausgebildet, ferner ein Mischwasserkanal 14, dessen Ausgang auf dem Umfang des Einsatzstückes 11 gelegen ist. Das Einsatzstück 11 ist gegen den Armaturenkörper 10 mit zwei Dichtungen 12 und 15 abgedichtet. An das Einsatzstück 11 angrenzend ist im Armaturenkörper 10 eine Mischkartusche 16 angeordnet. Die in ihrer Ausbildung dem Stand der Technik entsprechende Mischkartusche 16 weist an ihrem dem Einsatzstück 11 abgewandten oberen Ende in an sich bekannter Weise einen Stellhebel 17 auf. Zur Festlegung der Mischkartusche 16 ist ein die Mischkartusche übergreifender und mit dem Armaturenkörper 10 verschraubbarer Schraubring 18 vorgesehen.

Soweit der Stellhebel 17 den Schraubring 18 überragt, ist auf das freie Ende des Stellhebels 17 ein Adapter 19 aufgesteckt und mittels einer axial ange-ordneten Befestigungsschraube 20 an dem Stellhebel 17 befestigt. In dem Adapter 19 ist ein den Adapter in einer zugeordneten Bohrung quer, d.h. rechtwinklig zur Längsachse von Stellhebel 17 und Mischkartusche 16 durchgreifender Bolzen 21 festgelegt, dessen beide äußere Enden jeweils über den Adapter 19 überstehen.

Die Anordnung von Stellhebel 17 und Adapter 19 ist von einer Kulissenhülse 22 übergriffen, die in einer noch zu beschreibenden Weise in dem Armaturenkörper 10 sowohl längsverschieblich als auch drehbeweglich angeordnet ist. In der Kulissenhülse 22 sind einander gegenüberliegend zwei Langlöcher 23 zur Aufnahme und Führung der äußeren Enden des Bolzens 21 ausgebildet, wobei die Längsachse der Langlöcher 23 schräg, d.h. im Winkel zur Mittenachse von Stellhebel 17 und Mischkartusche 16 ausgerichtet ist. Dabei ist die Ausrichtung der Langlöcher 23 zur Mittenachse von Stellhebel 17 und Mischkartusche 16 so getroffen, dass eine Längsverschiebung der Kulissenhülse 22 gegenüber dem feststehenden Stellhebel 17 bzw. Adapter 19 mit Bolzen 21 zu einer Verschwenkung des Stellhebels 17 an der Mischkartusche 16 führt, wobei durch die beiden Endlagen des Bolzens 21 am oberen bzw. unteren Ende des zugeordneten Langloches 23 einerseits die Schließstellung und andererseits die Öffnungsstellung der Sanitärarmatur definiert ist. Damit die Längsbewegung wie auch die Verdrehung der Kulissenhülse 22 gegenüber dem Armaturenkörper 10 erleichtert ist, ist auf dem äußeren Umfang de Kulissenhülse 22 ein Gleitring 24 angeordnet, dessen Lage noch zu beschreiben ist.

Schließlich ist die Kulissenhülse 22 an ihrem oberen, d.h. der Mischkartusche 16 abgewandten Ende von einem hutförmigen Betätigungsknauf 25 übergriffen, der mittels einer seitlich eingreifenden Befestigungsschraube 26 fest mit der Kulissenhülse 22 verbunden ist, sodass die Kulissenhülse 22 allen Bewegungen des Betätigungsknaufes 25, also dessen Ziehen und Drücken und dessen Drehen folgt.

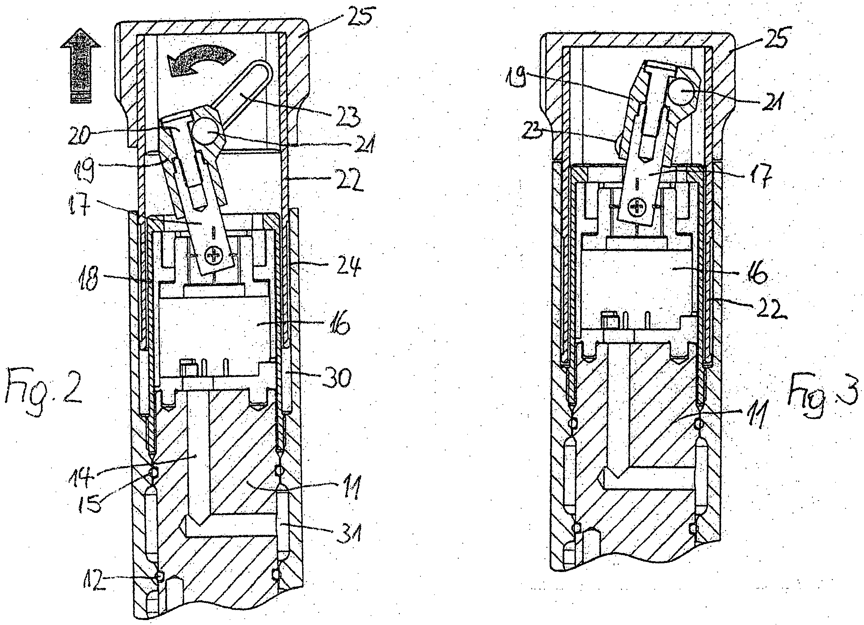

Die Funktion der Sanitärarmatur ist im Einzelnen den Fig. 2 und 3 zu entnehmen, wobei aus Gründen der besseren Erkennbarkeit zunächst die Offenstellung der Sanitärarmatur gemäß Fig. 2 beschrieben wird.

Hierbei ist der Betätigungsknauf 25 von dem Armaturenkörper 10 weg, bei einer Standarmatur nach oben, gezogen, sodass der Bolzen 21 in den an der Kulissenhülse 22 ausgebildeten Langlöchern 23 an deren unteres Ende verschoben und dadurch der Stellhebel 17 der Mischkartusche 16 in eine, in der Darstellung der Fig. 3 nach links verkippte Stellung geschwenkt ist, in der eine vollständige Öffnung der Sanitärarmatur gegeben ist.

Es ist zu erkennen, dass einerseits die Anordnung der Langlöcher 23 in dem oberen Bereich der Kulissenhülse 22 derart getroffen ist, dass dieser, die Langlöcher 23 aufweisende Bereich von dem hutförmigen Betätigungsknauf 25 überdeckt und daher nicht sichtbar ist. Gleichzeitig ist zu erkennen, dass in dieser vollständig herausgezogenen Stellung des Betätigungsknaufes 25 der auf dem äußeren Umfang am unteren Ende der Kulissenhülse 22 angeordnete Gleitring 24 noch vollständig im Inneren des Armaturenkörpers 10 liegt. Es ist ferner zu erkennen, dass der Armaturenkörper 10 an seinem oberen, dem Betätigungsknauf 25 zugewandten Ende einen Einstich 30 zur Aufnahme und Führung der Kulissenhülse 22 sowie des außen darauf sitzenden Gleitringes 24 aufweist. Ferner ist zu erkennen, dass der in dem Einsatzstück 11 ausgebildete Mischwasserkanal 14 am äußeren Umfang des Einsatzstückes 11 in eine umlaufende Mischwasserkammer 31 mündet, die an den nicht dargestellten Auslauf der Sanitärarmatur angeschlossen ist.

Entsprechend der vorstehenden Beschreibung ist in der in Fig. 3 dargestellten Stellung des Betätigungsknaufes 25 der Betätigungsknauf 25 auf den Armaturenkörper 10 verschoben, bis die Mischkartusche 16 geschlossen ist. Durch die Verschiebung des am Adapter 19 festgelegten Bolzens 21 in den Langlöchern 23 der Kulissenhülse 22 nach - in der Darstellung - rechts oben ist der Stellhebel 17 nun in eine nach rechts verkippte Stellung verschwenkt, die der Schließstellung der Sanitärarmatur entspricht.

Aufgrund der in jeder Auszugsstellung gegebenen, durch die formschlüssige Verbindung zwischen Adapter 19 und Kulissenhülse 22 über den mit seinen beiden Enden in den Langlöchern 23 der Kulissenhülse 22 gelegenen Bolzen 21 verwirklichte drehfeste Verbindung zwischen dem Betätigungsknauf 25 und dem Stellhebel 17 ist in jeder beliebigen Auszugsstellung des Betätigungsknaufes 25 gegenüber dem Armaturenkörper 10 ein Verdrehen des Betätigungsknaufes 25 um die Längsachse von Stellhebel 17 und Mischkartusche 16 gegeben, wobei mit dieser Drehbewegung in an sich bekannter Weise die Temperatureinstellung an der Sanitärarmatur erfolgt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Sanitärarmatur mit einem Armaturenkörper (10) und mit einer in dem Armaturenkörper (10) angeordneten und bodenseitig an eine Kaltwasserzuleitung und eine Warmwasserzuleitung angeschlossenen sowie einen mit einem Armaturenauslauf verbundenen Mischwasserausgang aufweisenden Mischkartusche (16), wobei an dem Armaturenkörper (10) ein Bedienungselement zur Einstellung von Menge und Temperatur des in der Mischkartusche (16) zu erzeugenden Mischwassers angeordnet ist, welches an einen an der Mischkartusche (16) angeordneten Stellhebel (17) gekoppelt ist, mit dem durch Verschwenken um eine horizontal angeordnete Schwenkachse die Durchflussmenge einstellbar und durch Verdrehen um eine Mittelachse das Mischungsverhältnis des zufließenden Kalt- und Warmwassers einstellbar ist, wobei eine lineare Verschiebung des Bedienungselements in die Verschwenkung des Stellhebels (17) und eine Drehbewegung des Bedienungselements in die Verdrehung des Stellhebels (17) umsetzbar ist, **dadurch gekennzeichnet, dass** das Bedienungselement als Zug-Dreh-Mechanismus mit einem auf dem oberen Ende des Armaturenkörpers (10) angeordneten und am Armaturenkörper (10) linear verschieblich geführten und um seine Mittelachse drehbaren Betätigungsknauf (25) ausgebildet ist, wobei zur Umsetzung der Bewegungen des Betätigungsknaufes (25) zwischen Stellhebel (17) der Mischkartusche (16) und Betätigungsknauf (25) eine mit dem Betätigungsknauf (25) fest verbundene Kulissenhülse (22) angeordnet ist, mittels der die lineare Verschiebung der Kulissenhülse (22) in die Verschwenkung des Stellhebels (17) und die Drehbewegung der Kulissenhülse (22) in die Verdrehung des Stellhebels (17) umsetzbar ist.

2. Sanitärarmatur nach Anspruch 1, **dadurch gekennzeichnet, dass** die Kulissenhülse (22) wenigstens ein in ihrer Wandung ausgebildetes Langloch (23) zur Aufnahme und Führung eines an dem oberen Ende des Stellhebels (17) der Mischkartusche (16) angebrachten Bolzens (21) aufweist, wobei die Längsachse des Langloches (23) im Winkel zur Mittelachse des Stellhebels (17) ausgerichtet ist derart, dass der Stellhebel (17) bei der Längsverschiebung der Kulissenhülse (22) gegenüber dem ortsfesten Stellhebel (17) durch die Bewegung des Bolzens (21) entlang des Langloches (23) verschwenkt wird.

3. Sanitärarmatur nach Anspruch 1 oder 2, **dadurch gekennzeichnet, dass** auf den an der Mischkartusche (16) befindlichen Stellhebel (17) ein Adapter (19) als Träger des den Adapter (19) quer durchsetzenden Bolzens (21) aufgesetzt und fest mit dem Stellhebel (17) verbunden ist, wobei die den Stellhebel (17) einschließlich Adapter (19) außen übergreifende Kulissenhülse (22) zwei einander gegenüberliegende und die beiden überstehenden Enden des Bolzens (21) aufnehmende Langlöcher (23) aufweist.

4. Sanitärarmatur nach einem der Ansprüche 1 bis 3, **dadurch gekennzeichnet, dass** die Kulissenhülse (22) mittels eines auf ihrem äußeren Umfang festgelegten und zwischen Kulissenhülse (22) und Armaturenkörper (10) angeordneten Gleitringes (24) in dem Armaturenkörper (10) leicht verschiebbar und drehbar ist.

5. Sanitärarmatur nach Anspruch 4, **dadurch gekennzeichnet, dass** der Gleitring (24) in dem der Mischkartusche (16) zugewandten Endbereich der Kulissenhülse (22) derart angeordnet ist, dass bei in die maximale Öffnungsstellung des Stellhebels (17) verschobener Kulissenhülse (22) der Gleitring (24) im Inneren des Armaturenkörpers (10) verbleibt.

6. Sanitärarmatur nach Anspruch 4 oder 5, **dadurch gekennzeichnet, dass** der Gleitring (24) aus einem Kunststoff besteht.

7. Sanitärarmatur nach einem der Ansprüche 1 bis 6, **dadurch gekennzeichnet, dass** der Betätigungsknauf (25) mit einer in Längsrichtung des Armaturenkörpers (10) ausgerichteten umlaufenden Schürze in seiner Schließstellung den Armaturenkörper (10) außen übergreift, wobei die Längsrichtung der an den Betätigungsknauf (25) angesetzten Schürze derart bemessen ist, dass in der maximalen Öffnungsstellung des Stellhebels (17) die Schürze den Abstand zwischen dem Betätigungsknauf (25) und dem Armaturenkörper (10) überdeckt.

## Claims

1. A sanitary fitting comprising a fitting body (10) and comprising a mixing cartridge (16) which is arranged in the fitting body (10) and connected at the bottom to a cold water supply line and a hot water supply line and which has a mixed water outlet connected to a fitting spout, wherein an operating element for adjusting quantity and temperature of the mixed water to be prepared in the mixing cartridge (16) is arranged on the fitting body (10), which operating element is coupled to an adjusting lever (17) which is arranged at the mixing cartridge (16) and by means of which the flow rate can be adjusted by pivoting about a horizontally arranged pivot axis, and by turning about a center axis, the mixing ratio of the inflowing cold and hot water can be adjusted, wherein a linear displacement of the operating element can be converted into a pivoting of the adjusting lever (17) and a turning movement of the operating element can be converted into the turning of the adjusting lever (17), **characterized in that** the operating element is designed as a pulling-turning-mechanism that comprises an actuation knob (25) which is arranged on the upper end of the fitting body (10) and is guided to be linearly movable on the fitting body (10) and turnable about its center axis, wherein for converting the movements of the actuation knob (25) a slotted sliding sleeve (22) is arranged between the adjusting lever (17) of the mixing cartridge (16) and the actuation knob (25), which slotted sliding sleeve (22) is fixedly connected to the actuation knob (25) and by means of which the linear displacement of the slotted sliding sleeve (22) can be converted into the pivoting of the adjusting lever (17) and the turning movement of the slotted sliding sleeve (22) can be converted into the turning of the adjusting lever (17).

2. The sanitary fitting according to claim 1, **characterized in that** the slotted sliding sleeve (22) has at least one oblong hole (23) formed in its wall for accommodating and guiding a pin (21) attached at the upper end of the adjusting lever (17) of the mixing cartridge (16), wherein the longitudinal axis of the oblong hole (23) is aligned with the center axis of the adjusting lever (17) with an angle in such a manner that during the longitudinal displacement of the slotted sliding sleeve (22) with respect to the stationary adjusting lever (17), the adjusting lever (17) is pivoted as a result of the movement of the pin (21) along the oblong hole (23).

3. The sanitary fixture according to claim 1 or 2, **characterized in that** an adapter (19) as a carrier of the pin (21) transversely penetrating the adaptor (19) is placed onto the adjusting lever (17) located at the mixing cartridge (16) and is fixedly connected to the adjusting lever (17), wherein the slotted sliding sleeve (22), which engages on the outside over the adjusting lever (17) including the adaptor (19), has two oblong holes (23) which are located opposite one another and accommodate the protruding ends of the pin (21).

4. The sanitary fitting according to any one of claims 1 to 3, **characterized in that** the slotted sliding sleeve (22) is easily displaceable and turnable in the fitting body (10) by means of a sliding ring (24) fixed on its outer circumference and arranged between the slotted sliding sleeve (22) and the fitting body (10).

5. The sanitary fitting according to claim 4, **characterized in that** in the slotted sliding sleeve's (22) end region facing the mixing cartridge (16), there is arranged the sliding ring (24) in such a manner that the sliding ring (24) remains inside the fitting body (10) when the slotted sliding sleeve (22) is moved into the maximum opening position of the adjusting lever (17).

6. The sanitary fitting according to claim 4 or 5, **characterized in that** the sliding ring (24) is made of a plastic material.

7. The sanitary fitting according to any one of claims 1 to 6, **characterized in that**, in its closed position, the actuation knob (25) engages by means of a circumferential skirt aligned in the longitudinal direction of the fitting body (10) over the fitting body (10) on the outside thereof, wherein the longitudinal direction of the skirt formed on the actuation knob (25) is dimensioned in such a manner that in the maximum opening position of the adjusting lever (17), the skirt covers the spacing between the actuation knob (25) and the fitting body (10).

## Revendications

1. Robinetterie sanitaire, avec un corps de robinetterie (10) ainsi qu'avec une cartouche mélangeuse (16) placée dans le corps de robinetterie (10) et raccordée, côté du fond inférieur à une alimentation d'eau froide et à une alimentation d'eau chaude et comportant une sortie d'eau mélangée, reliée à un écoulement de robinetterie, sur le corps de robinetterie (10) état placé un élément de manoeuvre destiné à régler la quantité et la température de l'eau mélangée qui doit être générée dans la cartouche mélangeuse (16), lequel est accouplé à un levier de réglage (17) placé sur la cartouche mélangeuse (16), à l'aide duquel, par pivotement autour d'un axe de pivotement placé à l'horizontale, le débit est réglable et par rotation autour d'un axe médian, le rapport de mélange de l'eau froide et chaude alimentée est réglable, une translation linéaire de l'élément de manoeuvre pouvant être convertie dans le pivotement du levier de réglage (17) et un déplacement en rotation de l'élément de manoeuvre pouvant être converti dans la rotation du levier de réglage (17), **caractérisée en ce que** l'élément de manoeuvre est conçu sous la forme d'un mécanisme de traction-rotation avec un bouton d'actionnement (25) placé sur l'extrémité supérieure du corps de robinetterie (10) et guidé en translation linéaire sur le corps de robinetterie (10) et rotatif autour de son axe médian, pour la conversion des déplacements du bouton d'actionnement (25) entre le levier de réglage (17) de la cartouche mélangeuse (16) et le bouton d'actionnement (25) étant placée une douille coulissante (22) fixement reliée avec le bouton d'actionnement (25), au moyen de laquelle la translation linéaire de la douille coulissante (22) est convertible dans le pivotement du levier de réglage (17) et le déplacement en rotation de la douille coulissante (22) est convertible dans la rotation du levier de réglage (17).

2. Robinetterie sanitaire selon la revendication 1, **caractérisée en ce que** la douille coulissante (22) comporte au moins un trou oblong (23) réalisé dans sa paroi, destiné à recevoir et à guider un boulon (21) monté sur l'extrémité supérieure du levier de réglage (17) de la cartouche mélangeuse (16), l'axe longitudinal du trou oblong (23) étant orienté dans un angle par rapport à l'axe médian du levier de réglage (17), de telle sorte que lors de la translation longitudinale de la douille coulissante (22), le levier de réglage (17) soit pivoté par rapport au levier de réglage (17) stationnaire, par le déplacement du boulon (21)le long du trou oblong (23).

3. Robinetterie sanitaire selon la revendication 1 ou 2, **caractérisée en ce que** sur le levier de réglage (17) situé sur le cartouche mélangeuse (16), un adaptateur (19) est emboîté en tant que support du boulon (21) traversant l'adaptateur (19) à la transversale et est relié de manière fixe avec le levier de réglage (17), la douille coulissante (22) qui chevauche par l'extérieur le levier de réglage (17), y compris l'adaptateur (19) comportant deux trous oblongs (23) mutuellement opposés et recevant les deux extrémités débordantes du boulon (21).

4. Robinetterie sanitaire selon l'une quelconque des revendications 1 à 3, **caractérisée en ce qu'**au moyen d'une bague de glissement (24) immobilisée sur sa périphérie extérieure et placée entre la douille coulissante (22) et le corps de robinetterie (10), la douille coulissante (22) est aisément déplaçable et rotative dans le corps de robinetterie (10).

5. Robinetterie sanitaire selon la revendication 4, **caractérisée en ce que** la bague de glissement (24) est placée dans la zone d'extrémité de la douille coulissante (22) qui fait face à la cartouche mélangeuse (16) de telle sorte que lorsque la douille coulissante (22) est déplacée dans la position d'ouverture maximale du levier de réglage (17), la bague de glissement (24) reste à l'intérieur du corps de robinetterie (10).

6. Robinetterie sanitaire selon la revendication 4 ou la revendication 5, **caractérisée en ce que** la bague de glissement (24) est constituée d'une matière plastique.

7. Robinetterie sanitaire selon l'une quelconque des revendications 1 à 6, **caractérisée en ce que** par un tablier périphérique orienté dans la direction longitudinale du corps de robinetterie (10), dans sa position de fermeture, le bouton d'actionnement (25) chevauche par l'extérieur le corps de robinetterie (10), la direction longitudinale du tablier ajusté sur le bouton d'actionnement (25) étant dimensionnée de telle sorte que dans la position d'ouverture maximale du levier de réglage (17), le tablier recouvre l'écart entre le bouton d'actionnement (25) et le corps de robinetterie (10).
